# EUROPEAN PATENT APPLICATION

(11) **EP 4 715 915 A1**
(43) Date of publication of application: **25.03.2026**
(21) Application number: 25179950.8
(22) Date of filing: 30.05.2025
(51) Int. Cl.: H01M 10/04, H01M 50/103, H01M 50/107, H01M 50/595

(54) **SECONDARY BATTERY AND METHOD FOR MANUFACTURING SAME**

(30) Priority: 24.09.2024 KR 20240128855
(71) Applicant: SAMSUNG SDI CO., LTD., Yongin-si, Gyeonggi-do 17084 (KR)
(72) Inventor: HEO, Eungkuk, 17084 Yongin-Si Gyeonggi-do (KR)
(74) Representative: Gulde & Partner

(57) **Abstract**

A secondary battery, including an electrode assembly having a first electrode, a second electrode, and a separator between the first electrode and the second electrode, a case accommodating the electrode assembly, and a tape attached to an inner surface of the case, wherein the tape includes a first adhesive layer and a second adhesive layer, the first adhesive layer contacts and adheres to the inner surface of the case, and the second adhesive layer faces the electrode assembly.

## Description

### BACKGROUND

### 1. Field

Embodiments of the present disclosure relate to a secondary battery and a method for manufacturing the secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

Embodiments are directed to a secondary battery, including an electrode assembly having a first electrode, a second electrode, and a separator between the first electrode and the second electrode, a case accommodating the electrode assembly, and a tape attached to an inner surface of the case, wherein the tape includes a first adhesive layer and a second adhesive layer, the first adhesive layer contacts and adheres to the inner surface of the case, and the second adhesive layer faces the electrode assembly.

The first adhesive layer may be adhesive at a first temperature, and the second adhesive layer may become adhesive at a second temperature higher than the first temperature.

The second temperature may be 60°C or higher.

The second adhesive layer may become adhesive due to an application of heat during a formation process of the secondary battery.

Preferably, the second adhesive layer consists of a different adhesive material than the first adhesive layer, which may become adhesive at higher temperatures than the adhesive material of the first adhesive material.

An electrode tab, which may be connected to one of the first electrode and the second electrode, may protrude through at least one surface of the electrode assembly, and the tape may be attached to one or more portions of the inner surface of the case that are not facing the electrode tab.

The case may include a bottom portion, a cylindrical sidewall portion extending upward from the bottom portion, and an opening opposite to the bottom portion, and the tape may be attached to an inner surface of the cylindrical sidewall portion.

The electrode assembly may be a winding-type electrode assembly in which the first electrode, the separator, and the second electrode are wound, the first electrode may include a first coated portion coated with an active material, and a width of the tape along a direction of extension of the cylindrical sidewall portion may be equal to or greater than a first length, which may be a width of the first coated portion along a direction of a winding axis of the electrode assembly.

The second electrode may include a second coated portion coated with an active material, and the width of the tape along the direction of extension of the cylindrical sidewall portion may be equal to or less than a second length, which may be a width of the second coated portion along the direction of the winding axis of the electrode assembly.

The case may include a rectangular bottom portion, at least four sidewall portions extending upward from the bottom portion, and an opening opposite to the bottom portion, and the tape may be attached to an inner surface of each of the at least four sidewall portions except one sidewall portion of the at least four sidewall portions.

An electrode tab, which may be connected to one of the first electrode and the second electrode, protrudes through one surface of the electrode assembly, and the electrode tab may face the inner surface of the one sidewall portion of the at least four sidewall portions to which the tape may not be attached.

A width of the tape measured from the bottom portion may be 110% to 150% of a height of the electrode assembly measured from the bottom portion in a direction of extension of the four sidewall portions from the bottom portion.

A second aspect of the disclosure is directed to a method of manufacturing the aforementioned secondary battery, the method includes: preparing an electrode assembly including a first electrode, a second electrode, and a separator interposed between the first electrode and the second electrode, preparing a case and attaching a tape including a first adhesive layer and a second adhesive layer to an inner surface thereof, inserting the electrode assembly into the case, injecting electrolyte into the case, and sealing the case by coupling a cap plate to the case, wherein the first adhesive layer of the tape is positioned to contact and adhere to the inner surface of the case, and the second adhesive layer of the tape is positioned to face the electrode assembly.

The method may further include, after the sealing of the case, charging and discharging the secondary battery at a first temperature or aging the secondary battery at a second temperature.

The first temperature and the second temperature may each be 60°C or higher, and the second adhesive layer may exhibit adhesiveness after application of heat during the charging and discharging of the secondary battery or after application of heat during the aging of the secondary battery.

Preferably, after the sealing of the case, the secondary battery may be charged and discharged at a first temperature, wherein the first temperature is 60°C or higher, and the second adhesive layer exhibits adhesiveness after application of heat during the charging and discharging of the secondary battery. In other words, the charging and discharging of the secondary battery causes the generation of the heat to the first temperature.

In another preferred implementation of the method, after the sealing of the case, the secondary battery may be aged (i.e. heated from an external heat source) at a second temperature, wherein the second temperature is 60°C or higher, and the second adhesive layer exhibits adhesiveness after application of heat during the aging of the secondary battery.

The method may further include connecting an electrode tab to one of the first electrode and the second electrode, and positioning the electrode tab to protrude through at least one surface of the electrode assembly, wherein the tape may be attached to one or more portions of the inner surface of the case, except for a portion of the inner surface facing the electrode tab.

The case may include a bottom portion, a cylindrical sidewall portion extending upward from the bottom portion, and an opening formed to be opposite to the bottom portion, and the tape may be attached to an inner surface of the cylindrical sidewall portion.

The electrode assembly may be prepared by winding the first electrode, the separator, and the second electrode, the first electrode may include a first coated portion coated with an active material, the second electrode may include a second coated portion coated with an active material, and a width of the tape along a direction of extension of the cylindrical sidewall portion may be equal to or greater than a first length, which may be a width of the first coated portion along a direction of a winding axis of the electrode assembly, and may be equal to or less than a second length, which may be a width of the second coated portion along the direction of the winding axis of the electrode assembly.

The case may include a bottom portion, at least four sidewall portions extending upward from the bottom portion, and an opening formed to be opposite to the bottom portion, and the tape may be attached to an inner surface of each of the at least four sidewall portions except one sidewall portion of the at least four sidewall portions.

The method may further include connecting an electrode tab to one of the first electrode and the second electrode and positioning the electrode tab to protrude through at least one surface of the electrode assembly, wherein the inserting of the electrode assembly may include inserting the electrode assembly into the case such that a first surface of the electrode assembly, through which the electrode tab protrudes, may face the inner surface of the one sidewall portion of the at least four sidewall portions to which the tape may not be attached.

A width of the tape measured from the bottom portion may be 110% to 150% of a height of the electrode assembly measured from the bottom portion in a direction of extension of the four sidewall portions from the bottom portion.

### BRIEF DESCRIPTION OF DRAWINGS

Features will become apparent to those of skill in the art by describing in detail exemplary embodiments with reference to the attached drawings in which:

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 illustrates an exploded perspective view of an example of a secondary battery according to one embodiment of the present disclosure.
FIG. 2 illustrates a cross-sectional view of an example of a tape according to one embodiment of the present disclosure.
FIG. 3 illustrates a perspective view of a case for explaining an attachment position of a tape according to one embodiment of the present disclosure.
FIG. 4 illustrates a longitudinal cross-sectional view of a secondary battery for explaining an attachment position of a tape according to one embodiment of the present disclosure.
FIG. 5 illustrates an enlarged cross-sectional view of a secondary battery for explaining an attachment position of a tape according to one embodiment of the present disclosure.
FIG. 6 illustrates a perspective view of a case for explaining an attachment position of a tape according to one embodiment of the present disclosure.
FIG. 7 illustrates a longitudinal cross-sectional view of a secondary battery for explaining an attachment position of a tape according to one embodiment of the present disclosure.
FIG. 8 illustrates an enlarged cross-sectional view of a secondary battery for explaining an attachment position of a tape according to one embodiment of the present disclosure.
FIG. 9 illustrates a perspective view of a case for explaining an attachment position of a tape according to one embodiment of the present disclosure.
FIG. 10 illustrates an attachment position of a tape according to a comparative example.
FIG. 11 illustrates an attachment position of a tape according to a comparative example.
FIG. 12 illustrates an attachment position of a tape according to a comparative example.
FIG. 13 illustrates a flowchart of a method for manufacturing a secondary battery according to one embodiment of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

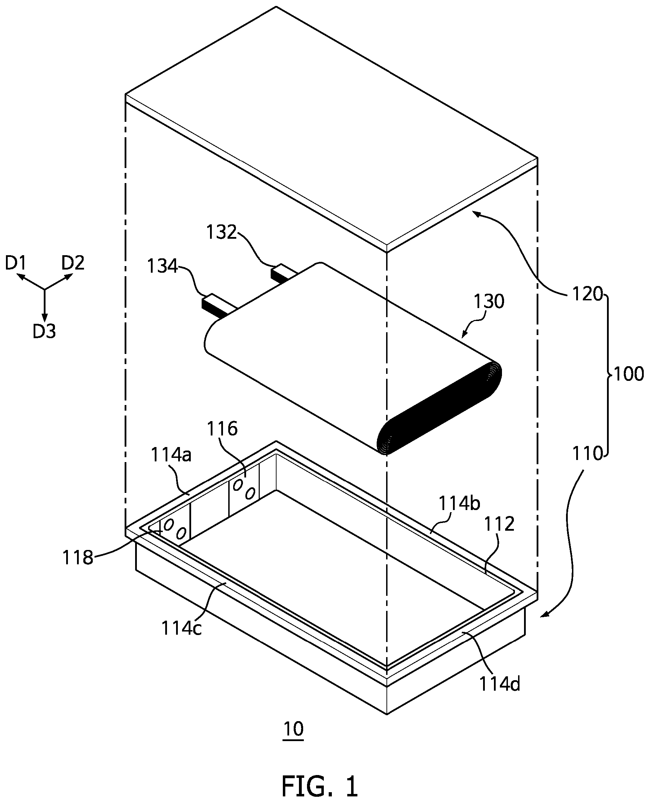

In the present disclosure, sizes (dimensions) and relative sizes (dimensions) of layers and regions shown in FIGS. 1 to 13 may be exaggerated for clarity of illustration. That is, the sizes (dimensions) shown in FIGS. 1 to 13 are for the sake of convenience of understanding and are not intended to limit the scope of the present disclosure. Furthermore, throughout the specification, like reference numerals will be given to like parts.

FIG. 1 illustrates an exploded perspective view of an example of a secondary battery 10 according to one embodiment of the present disclosure.

Referring to FIG. 1, the secondary battery 10 may include at least one electrode assembly 130 each of which may be configured by winding or stacking a positive electrode and a negative electrode together with a separator, which may be an insulator, between the positive electrode and the negative electrode. The secondary battery 10 may further include a case 100 accommodating the electrode assembly 130.

Each of the positive electrode and the negative electrode may include a coated portion (e.g., a mixture portion) where an active material may be applied to a current collector formed of a thin metal foil, and an uncoated portion where the active material is not applied.

In one embodiment, the positive electrode and the negative electrode may be stacked with an insulating separator therebetween. In an implementation, the electrode assembly 130 may have a structure in which a plurality of sheet-type positive and negative electrodes are stacked in an alternating manner with separators therebetween. In one embodiment, the electrode assembly 130 may be formed by winding the positive electrode and the negative electrode with the separator interposed therebetween.

The case 100 may form the overall outer appearance of the secondary battery. In one embodiment, the case 100 may be or include stainless use steel (stainless use steel: SUS). In an implementation, the case 100 may be or include a conductive metal, e.g., aluminum, an aluminum alloy, or a nickel-plated steel. In an implementation, the case 100 may include, e.g., a main body 110 that accommodates the electrode assembly 130 and a case cover 120 that seals the main body 110. Electrode terminals 116 and 118 may be located on one surface of the main body 110.

The main body 110 of the case 100 may include an opening in one side surface that is in perpendicular contact with the surface where the electrode terminals 116 and 118 are located. A receiving portion 112 for accommodating the electrode assembly 130 may be located approximately at a central region of the main body 110 and formed through press processing or the like. In an implementation, flanges 114a, 114b, 114c, and 114d may be located in four directions at an upper edge of the receiving portion 112.

In one embodiment, the case 100 may be formed by joining the main body 110 and the case cover 120. In an implementation, the case 100 may be formed by joining the main body 110 and the case cover 120 through by a metal joining method, e.g., welding, brazing, or soldering. The case cover 120 may be coupled to the flanges 114a, 114b, 114c, and 114d of the main body 110 thereby sealing the opening of the main body 110.

The positive electrode terminal 116, electrically connected to a positive electrode tab 132 of the electrode assembly 130, and the negative electrode terminal 118, electrically connected to a negative electrode tab 134 of the electrode assembly 130, may be coupled to the main body 110. In an implementation, the electrode terminals 116 and 118 may be located on at least one surface of the case. The positions of the electrode terminals 116 and 118 according to the present disclosure may have various locations and modifications.

The surface of the main body 110 where the electrode terminals 116 and 118 may be located may additionally include, e.g., an electrolyte injection hole, a vent, or the like.

In the electrode assembly 130, the positive electrode tab 132 may be located on one side of the positive electrode and be electrically connected to an uncoated portion of the positive electrode, and the negative electrode tab 134 may be located on one side of the negative electrode and be electrically connected to an uncoated portion of the negative electrode. The positive electrode tab 132 may be located at a specific position on one side of the positive electrode, and the negative electrode tab 134 may be located at a specific position on one side of the negative electrode.

The positive electrode tab 132 and the negative electrode tab 134 may be oriented in the same direction on one side of the electrode assembly 130. Further, a plurality of positive electrode tabs 132 respectively located on a plurality of positive electrodes may be joined together to form a first current collecting tab. Similarly, a plurality of negative electrode tabs 134 respectively located on a plurality of negative electrodes may be joined together to form a second current collecting tab.

The first current collecting tab and the second current collecting tab may be located at different positions on one side of the electrode assembly 130. In an implementation, the first current collecting tab and the second current collecting tab may be located on one side of the electrode assembly 130 while being spaced apart from each other. In an implementation, the first current collecting tab may be located on one side of the electrode assembly 130, and the second current collecting tab may be located on the other side (e.g., the opposite side) of the electrode assembly 130. Accordingly, the first current collecting tab and the second current collecting tab may remain separated from each other.

In one embodiment, the positive electrode tab 132 or the first current collecting tab, which may be connected to the positive electrode, may be electrically connected to the positive electrode terminal 116. The electrode terminal may serve as the positive electrode terminal. Further, the negative electrode tab 134 or the second current collecting tab, which may be connected to the negative electrode, may be electrically connected to the negative electrode terminal 118.

The secondary battery may be, e.g., a lithium secondary battery, a sodium secondary battery, or the like. The secondary battery may include any battery capable of repeatedly providing electricity through charging and discharging cycles.

The configuration of the secondary battery shown in FIG. 1 is merely exemplary, and in some embodiments, the secondary battery may include additional components that are not illustrated in FIG. 1, or some components may be omitted. Moreover, the shapes, positional relationships, and other aspects of the components of the secondary battery shown in FIG. 1 may be appropriately modified.

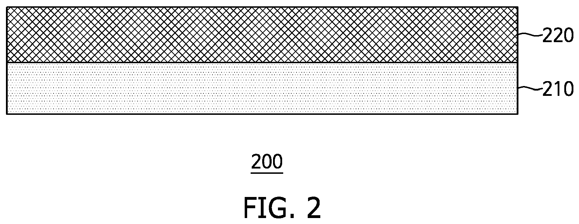

FIG. 2 illustrates a cross-sectional view of an example of a tape 200 according to one embodiment of the present disclosure. As shown in FIG. 2, the tape 200 may include, e.g., a first adhesive layer 210 and a second adhesive layer 220. The first adhesive layer 210 and the second adhesive layer 220 may be in direct contact with each other.

The first adhesive layer 210 may exhibit adhesiveness at a first temperature. Here, the first temperature may fall within a range of room temperature (e.g., 15°C to 25°C). In an implementation, the first adhesive layer 210 may exhibit adhesiveness at a temperature lower than the room temperature and may have adhesiveness at the room temperature or a temperature higher than the room temperature. At least a portion of the first adhesive layer 210 may be or include, e.g., polyurethane, ethylene-vinyl acetate (EVA), or polyolefin.

The second adhesive layer 220 may be or include a material that exhibits adhesiveness, e.g., becomes adhesive, upon the application of heat. In an implementation, the second adhesive layer 220 may exhibit adhesiveness at a second temperature that exceeds, e.g., is higher than, the first temperature (of the first adhesive layer 210). In other words, the second adhesive layer 220 may not exhibit adhesiveness at room temperature but may become adhesive at the second temperature, which may be higher than room temperature. Here, the second temperature may be, e.g., 60°C or higher. The second adhesive layer 220 may be or include, e.g., a thermoplastic adhesive, a hot melt adhesive, or the like.

In one embodiment, the tape 200 may be attached (adhered) to an inner surface of the case. Further, the tape 200 may be attached (adhered) to the electrode assembly accommodated within the case, thereby helping prevent the movement or shifting of the electrode assembly.

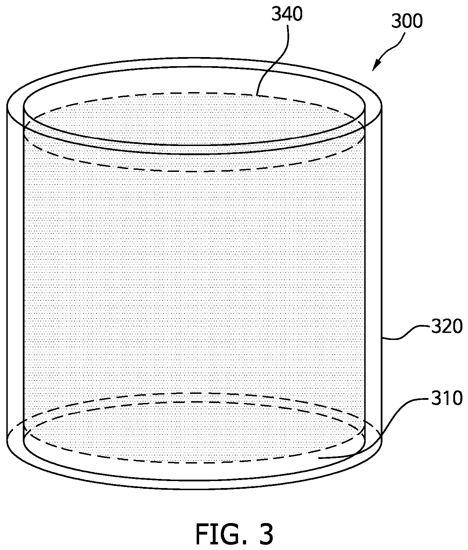

In one embodiment, the first adhesive layer 210 of the tape 200 may contact (e.g., directly contact) and adhere to the inner surface of the case (e.g., an inner lateral surface of the case). In an implementation, the second adhesive layer 220 of the tape 200 may face the electrode assembly accommodated within the case (e.g., the second adhesive layer 220 may be between the first adhesive layer 210 and the electrode assembly). While the electrode assembly may be arranged to come into contact with the second adhesive layer 220 during the insertion process into the case, this is not necessarily the case. In an implementation, the electrode assembly may not initially contact the second adhesive layer 220 during the insertion process into the case but may come into contact with the second adhesive layer 220 during subsequent charging and discharging process, as the electrode assembly expands. Examples of the positioning of the tape 200 on the inner surface of the case will be described in more detail with reference to FIG. 3 to 9.

In one embodiment, the second adhesive layer 220 of the tape 200 may exhibit adhesiveness during a formation process (an activation stage) of the secondary battery. In an implementation, the case in which the electrode assembly may be inserted may be sealed after the electrolyte is injected thereinto. Then, the secondary battery may undergo a formation process in which the secondary battery is charged and discharged or aged at a high temperature (e.g., in a range from 60°C to 90°C). During this stage, the adhesiveness of the second adhesive layer 220 may be exhibited. For example, as noted above, at these temperature ranges the second adhesive layer may have adhesive properties. That is, before the formation process, only the first adhesive layer 210 of the tape 200 may exhibit adhesiveness, but after the formation process, both the first adhesive layer 210 and the second adhesive layer 220 of the tape 200 may exhibit adhesiveness.

With this configuration, the electrode assembly of the secondary battery, after completing the formation process, may be fixed within the case to help prevent the movement or shifting of the electrode assembly. Further, prior to the formation process of the secondary battery, the second adhesive layer 220, which may face the electrode assembly, may not exhibit adhesiveness. This ensures sufficient time for the electrode assembly to be thoroughly impregnated with the electrolyte.

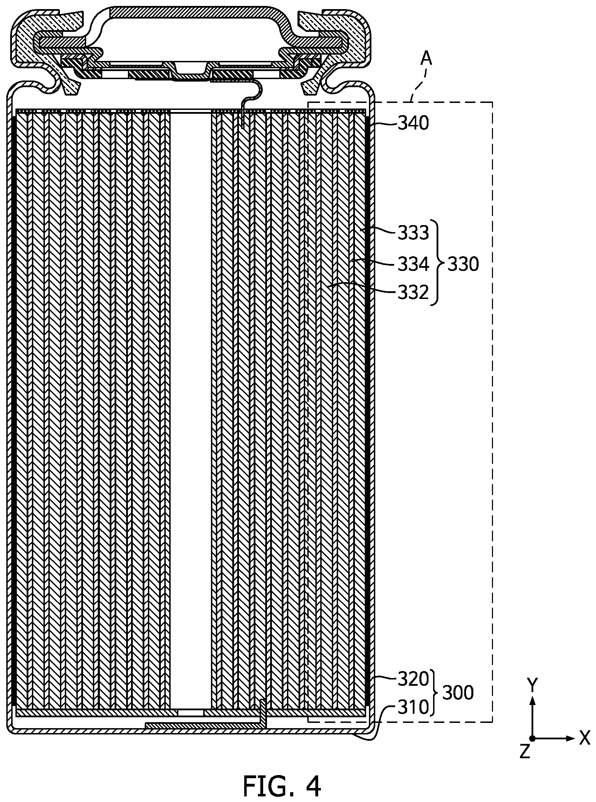

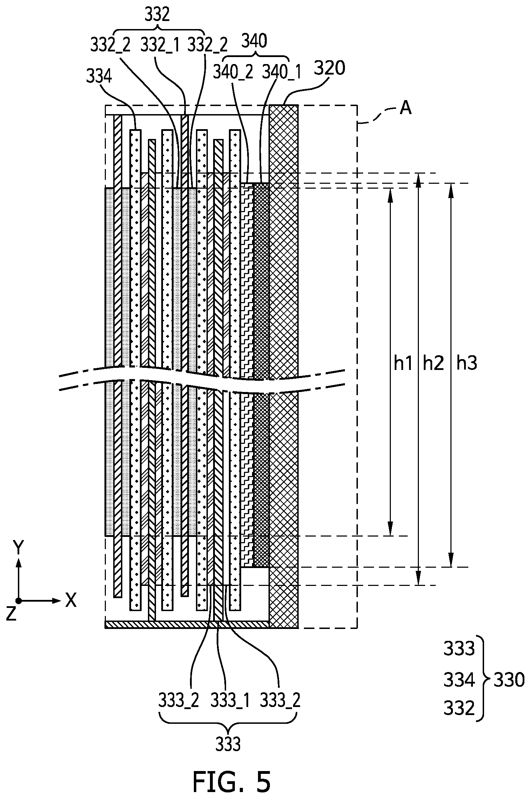

FIG. 3 illustrates a perspective view of a case 300 for explaining an attachment position of a tape 340 according to one embodiment of the present disclosure, FIG. 4 illustrates a longitudinal cross-sectional view of a secondary battery for explaining an attachment position of a tape 340 according to one embodiment of the present disclosure, and FIG. 5 illustrates an enlarged cross-sectional view of a secondary battery for explaining an attachment position of a tape 340 according to one embodiment of the present disclosure.

Referring to FIG. 3, the case 300 may be suitable for use in a cylindrical battery. In this configuration, the tape 340 may be attached along a perimeter of an inner surface (e.g., inner circumferential surface) of the case 300. In an implementation, the case 300 may include a bottom portion 310 and a cylindrical sidewall portion 320 extending from the bottom portion 310 with an opening at one end of the sidewall portion 320 opposite to the bottom portion 310. The tape 340 may be attached to an inner surface of the sidewall portion 320 of the case 300.

Referring to FIG. 4, an electrode assembly 330 may be inserted into the case 300. The electrode assembly 330 may be formed by winding a first electrode 332, a separator 334, and a second electrode 333. For example, the electrode assembly 330 may be a winding-type electrode assembly wherein the first electrode 332, the separator 334, and the second electrode are wound.

In one embodiment, an electrode tab may extend outward through at least one surface of the electrode assembly 330. The electrode tab may protrude outward from the wound cross-section of the electrode assembly 330. In an implementation, an electrode tab connected to the first electrode 332 of the electrode assembly 330 may protrude in a direction towards the opening opposite to the bottom portion 310 of the case 300, while an electrode tab connected to the second electrode 333 may protrude in the direction towards the bottom portion 310 of the case 300.

In one embodiment, the tape 340 may be attached to at least a portion of the inner surface of the case 300, excluding a portion of the inner surface opposing the electrode tabs of the electrode assembly 330. In an implementation, the tape 340 may not be attached to the bottom portion 310 of the case 300 that is opposite, e.g., faces, the electrode tab connected to the second electrode 333 of the electrode assembly 330. Instead, the tape 340 may be attached to the sidewall portion 320 of the case 300. The tape 340, which may be attached to the inner surface of the sidewall portion 320 of the case 300, may face the side surface of the electrode assembly 330 parallel to the winding axis (Y-axis) of the electrode assembly 330.

In this configuration, by attaching the tape 340 to at least a portion of the inner surface of the case 300, excluding a portion of the inner surface opposing the electrode tabs protruding from the electrode assembly 330, interference between the tape 340 and the electrode tabs may be prevented.

FIG. 5 illustrates an enlarged cross-sectional view of an area A shown in FIG. 4. Referring to FIG. 5, the electrode assembly 330 may include, e.g., a first electrode 332, a second electrode 333, and a separator 334. The first electrode 332 may include, e.g., a substrate 332_1 and first coated portions (first mixture portion) 332_2 each of which may be formed by coating an active material on the substrate 332_1. Similarly, the second electrode 333 may include, e.g., a substrate 333_1 and second coated portions 333_2 each of which may be formed by coating an active material on the substrate 333_1. In one embodiment, a width h1 of the first coated portion 332_2 along a winding axis direction (Y-axis) of the electrode assembly 330 may be smaller than a width h2 of the second coated portion 333_2. Here, the first electrode 332 may be the positive electrode.

In one embodiment, the tape 340 may be attached (adhered) to the sidewall portion 320 of the case. The tape 340 may include, e.g., a first adhesive layer 340_1 and a second adhesive layer 340_2. The first adhesive layer 340_1 may contact and adhere to the inner surface of the sidewall portion 320 of the case, and the second adhesive layer 340_2 may face the electrode assembly 330.

In one embodiment, a width h3 of the tape 340 along a direction in which the sidewall portion 320 extends may be determined based on the widths of the first coated portion 332_2 of the first electrode 332 and the second coated portion 333_2 of the second electrode 333. In an implementation, the width h3 of the tape 340 along the direction in which the sidewall portion 320 extends may be equal to or greater than the width h1 of the first coated portion 332_2 along the winding axis direction (Y-axis) of the electrode assembly 330. Additionally, the width h3 of the tape 340 along the direction in which the sidewall portion 320 extends may be equal to or less than a width h2 of the second coated portion 333_2 along the winding axis direction (Y-axis) of the electrode assembly 330.

In this configuration, the width h3 of the tape 340 along the direction in which the sidewall portion 320 extends may be at least equal to the width h1 of the first coated portion 332_2 and may not exceed the width h2 of the second coated portion 333_2 along the winding axis direction (Y-axis). This may allow the tape 340 to entirely cover a region where the first coated portion 332_2 and the second coated portion 333_2 overlap. Consequently, the tape 340 may comprehensively, e.g., entirely, cover the overlapping region of the first coated portion 332_2 and the second coated portion 333_2, where the winding diameter of the electrode assembly 330 reaches its maximum during the expansion of the electrode assembly 330.

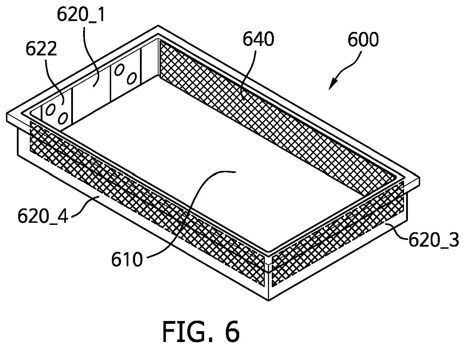

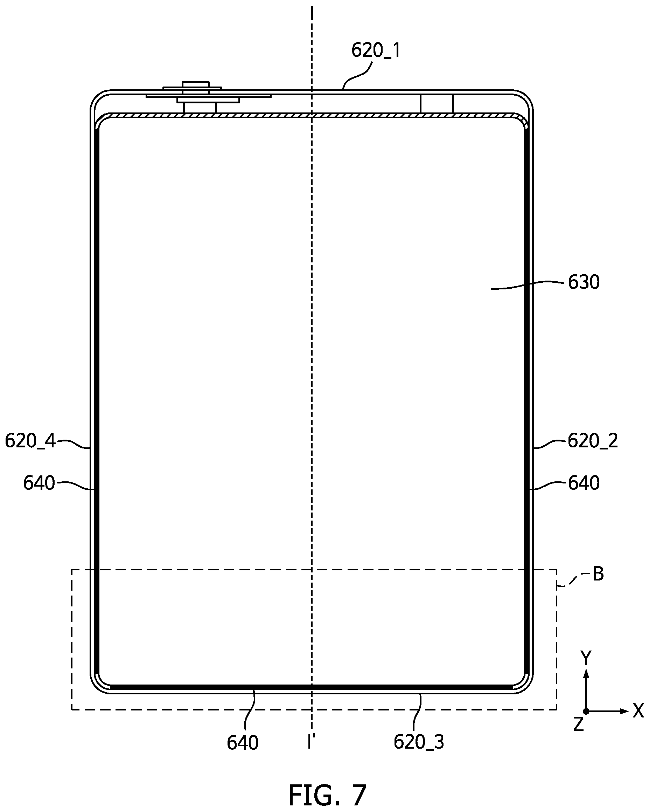

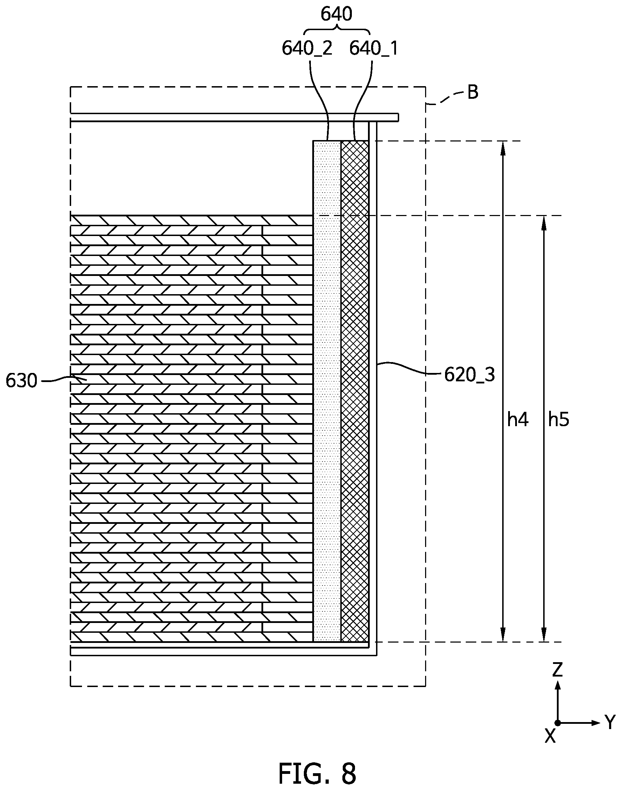

FIG. 6 illustrates a perspective view of a case for explaining an attachment position of a tape 640 according to one embodiment of the present disclosure. FIG. 7 illustrates a longitudinal cross-sectional view of a secondary battery for explaining an attachment position of a tape 640 according to one embodiment of the present disclosure. FIG. 8 illustrates an enlarged cross-sectional view of a secondary battery for explaining an attachment position of a tape 640 according to one embodiment of the present disclosure.

Referring to FIG. 6, a case 600 may be suitable for use in a prismatic battery. For example, the case 600 may include a rectangular bottom portion 610 and first to fourth sidewall portions 620_1 to 620_4 extending upward from the bottom portion 610. A space, which is opposite to the bottom portion 610 and surrounded by ends (e.g. upper edges) of the first to fourth side wall portions 620_1 to 620_4, may form an opening.

In one embodiment, at least one of the first to fourth sidewall portions 620_1 to 620_4 of the case 600 may include electrode terminals 622. In an implementation, the first sidewall portion 620_1 may include electrode terminals 622 that may be electrically connected to the electrode assembly. In the illustrated example of FIG. 6, the electrode terminals 622 are located only at the first sidewall portion 620_1. In an implementation, the electrode terminals 622 may be formed at one or more of the first to fourth sidewall portions 620_1 to 620_4.

In one embodiment, the tape 640 may be attached along at least a portion of a perimeter of an inner surface of the case 600. In an implementation, among the first to fourth sidewall portions 620_1 to 620_4, the tape 640 may be attached to inner surfaces of the second to fourth sidewall portions 620_2 to 620_4, except for the first sidewall portion 620_1 at which the electrode terminals are formed. For example, the tape may be attached to inner surfaces of the second to fourth sidewall portions 620_2 to 620_4 and may not be attached to the inner surface of the first sidewall portion 620_1. In an implementation, the tape 640 may be attached to an inner surface of the bottom portion 610 of the case 600.

Referring to FIG. 7, an electrode assembly 630 may be inserted into the case 600. The electrode assembly 630 may be a stack-type electrode assembly in which a sheet-type first electrode, a sheet-type separator, and a sheet-type second electrode are laminated. In an implementation, the electrode assembly 630 may be a winding-type electrode assembly in which the first electrode, the separator, and the second electrode are wound.

In one embodiment, electrode tabs may extend outward through at least one surface of the electrode assembly 630. In an implementation, electrode tabs respectively connected to the first electrode and the second electrode may protrude through at least one surface of the electrode assembly 630.

In one embodiment, in a state where the electrode assembly 630 is accommodated within the case 600, a tape 640 may not be attached to the sidewall portion of the case 600 (e.g., the first sidewall portion 620_1 where the electrode terminals are located) that may face the surface of the electrode assembly 630 through which the electrode tabs protrude. In an implementation, the tape 640 may be attached to the remaining sidewall portions (e.g., the second to fourth sidewall portions 620_2 to 620_4) of the case 600, excluding the sidewall portion that faces the surface of the electrode assembly 630 through which the electrode tabs may protrude. In this case, the tape 640 may be arranged to contact at least three surfaces of the electrode assembly 630.

In this configuration, the tape 640 may be attached to one or more inner surfaces of the case 600, excluding a surface facing the electrode tabs protruding through the electrode assembly 630. This may help prevent the tape 640 from interfering with the electrode tabs.

FIG. 8 illustrates an enlarged cross-sectional view of an area B shown in FIG. 7. FIG. 8 may represent a cross-sectional view of the area B taken along I-I' line.

Referring to FIG. 8, the tape 640 may be attached to the third sidewall portion 620_3 of the case. The tape 640 may include a first adhesive layer 640_1 and a second adhesive layer 640_2. The first adhesive layer 640_1 may contact and adhere to the inner surface of the third sidewall portion 620_3 of the case, while the second adhesive layer 640_2 may face the electrode assembly 630.

In one embodiment, a width h4 of the tape 640 measured from the bottom portion may be equal to or greater than a height h5 of the electrode assembly 630 measured from the bottom portion in a direction (Z-axis) in which the third sidewall portion 620_3 of the case extends from the bottom portion. In an implementation, the width h4 of the tape 640 may be 110% to 150% of the height h5 of the electrode assembly 630.

In other words, by designing the width h4 of the tape 640 to be equal to or greater than the height h5 of the electrode assembly 630 in consideration of the increase in the height h5 of the electrode assembly 630 caused by the expansion of the electrode assembly, the contact area between the electrode assembly 630 and the tape 640 may be maximized.

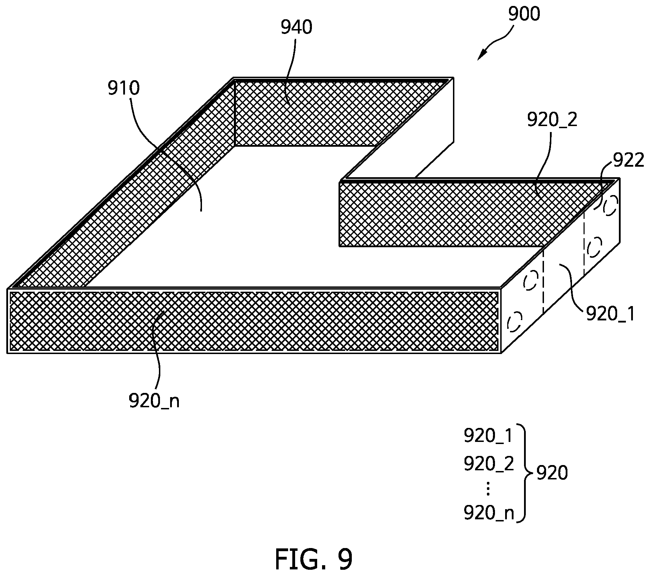

FIG. 9 illustrates a perspective view of a case for explaining an attachment position of a tape 940 according to one embodiment of the present disclosure. In FIG. 9, redundant descriptions of components described in FIGS. 6 to 8 will be omitted.

Referring to Fig. 9, a case 900 may be suitable for use in a polygonal battery. In an implementation, the case 900 may include, e.g., a polygonal bottom portion 910 and first to n-th sidewall portions 920_1 to 920_n extending upward from the bottom portion 910, where 'n' may be a natural number of 4 or greater. A space, which is opposite to the bottom portion 910 and surrounded by ends (e.g., upper edges) of the first to n-th sidewall portions 920_1 to 920_n, may form an opening.

In one embodiment, at least one of the first to n-th sidewall portions 920_1 to 920_n of the case 900 may be provided with electrode terminals 922. In the illustrated example of FIG. 9, the electrode terminals 922 are located only at the first sidewall portion 920_1. In an implementation, the electrode terminals 922 may be located at one or more of the first to n-th sidewall portions 920_1 to 920_n.

In one embodiment, the tape 940 may be attached along at least a portion of a perimeter of an inner surface of the case 900. In an implementation, among the first to n-th sidewall portions 920_1 to 920_n, the tape 940 may be attached to inner surfaces of the second to n-th sidewall portions 920_2 to 920_n, except for the first sidewall portion 920_1 at which the electrode terminals may be located. For example, the tape may be attached to inner surfaces of the second to n-th sidewall portions 920_2 to 920_n and may not be attached to the first sidewall portion 920_1. In an implementation, the tape 940 may be attached to an inner surface of the bottom portion 910 of the case 900.

In this configuration, the tape 940 may be attached to one or more inner surfaces of the case 900, excluding a surface facing the electrode tabs protruding through the electrode assembly 930. This may help prevent the electrode assembly 930 from moving within the case and prevents the tape 940 from interfering with the electrode tabs.

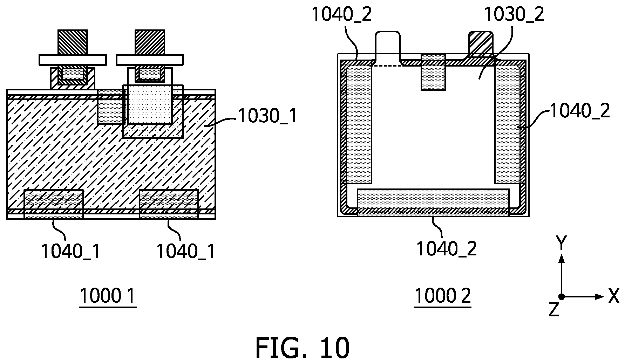

FIGS. 10 to 12 each illustrate an attachment position of a tape according to a comparative example. FIGS. 10 to 12 illustrate examples where a tape is attached to or a bonding area is formed on at least one surface of the electrode assembly. For the sake of convenience of explanation, a positive Y-axis direction in which the electrode tabs of the electrode assembly protrude is defined as an upper direction, and the opposite direction (a negative Y-axis direction) is defined as a lower direction.

Referring to FIG. 10, a first example 1000_1 illustrates an example in which a tape 1040_1 may be attached to an electrode assembly 1030_1 of a wound-type battery. The electrode assembly 1030_1 may be formed by winding a first electrode, a separator, and a second electrode. The tape 1040_1 may be attached to a lower surface of the electrode assembly 1030_1. In this configuration, the tape 1040_1 may help prevent the separator of the electrode assembly 1030_1 from being rolled inward into the electrode assembly 1030_1. However, because the tape 1040_1 is only attached to the surface of the electrode assembly 1030_1, it may not effectively restrain the movement or shifting of the electrode assembly 1030_1 within the case in the event of a battery drop.

A second example 1000_2 illustrates an example in which a tape 1040_2 may be attached to an electrode assembly 1030_2 of a stacked-type battery. The electrode assembly 1030_2 may be formed by sequentially stacking a sheet-shaped first electrode, a sheet-shaped separator, and a sheet-shaped second electrode. The tape 1040_2 may be attached to each of a lower surface and both side surfaces of the electrode assembly 1030_2. Similar to the first example 1000_1, the tape 1040_2 may help prevent the separator of the electrode assembly 1030_2 from being rolled inward. However, it may not effectively restrain the movement or shifting of the electrode assembly 1030_2 within the case.

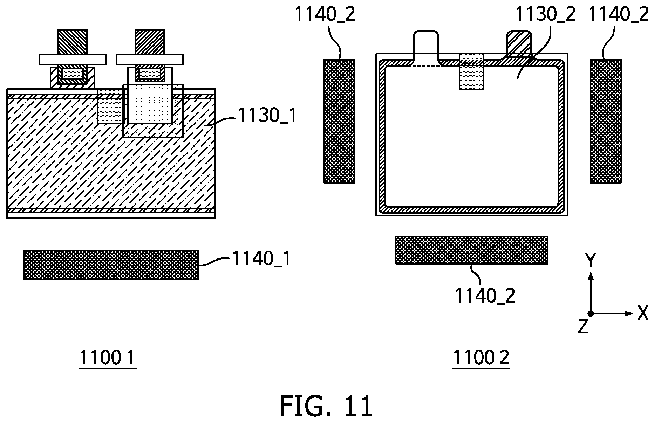

Referring to FIG. 11, a third example 1100_1 illustrates an example in which a bonding area 1140_1 may be formed on a surface of an electrode assembly 1130_1 of a wound-type battery, and a fourth example 1100_2 illustrates an example in which a bonding area 1140_2 may be formed on a surface of an electrode assembly 1130_2 of a stacked-type battery.

Referring to the third example 1100_1, the bonding area 1140_1 may be formed on a lower surface of the electrode assembly 1130_1. The electrode assembly 1130_1 may be attached to an inner surface of a case through the bonding area 1140_1. This configuration may help prevent the movement or shifting of the electrode assembly 1130_1 within the case. However, the electrolyte infiltration path into the electrode assembly 1130_1 may be blocked by the bonding area 1140_1, which leads to reduced electrolyte impregnation. Further, during the process of inserting the electrode assembly 1130_1 into the case, the bonding area 1140_1 may be deformed, which may degrade the quality of the battery.

Referring to the fourth example 1100_2, the bonding area 1140_2 may be formed on each of a lower surface and both side surfaces of the electrode assembly 1130_2. This configuration, similar to the third example 1100_1, may prevent the movement of shifting of the electrode assembly 1130_2. However, electrolyte impregnation may be reduced, and the quality of the battery may be reduced.

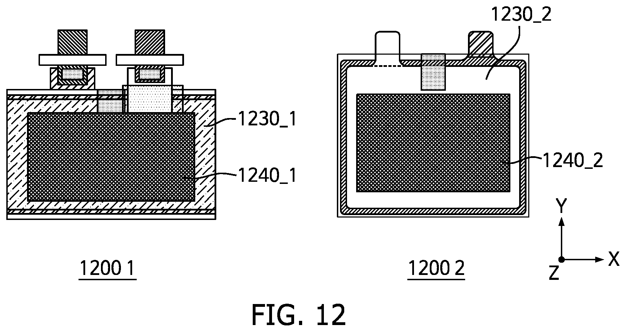

Referring to FIG. 12, a fifth example 1200_1 illustrates an example in which a bonding area 1240_1 may be formed on a surface of an electrode assembly 1230_1 of a wound-type battery, and a sixth example 1200_2 illustrates an example in which a bonding area 1240_2 may be formed on a surface of an electrode assembly 1230_2 of a stacked-type battery.

Referring to the fifth example 1200_1, in a Z-axis direction, a bonding area 1240_1 may be formed on each of a front surface and/or a rear surface of the electrode assembly 1230_1. This configuration may help prevent the movement of shifting of the electrode assembly 1230_1 within the case. However, a wound cross-section of the electrode assembly 1230_1 may be exposed, causing an inward rolling of the separator. Further, as a thickness of the electrode assembly 1230_1 along the Z-axis direction increases due to the bonding area 1240_1, this may be disadvantageous in view of battery capacity.

Referring to the sixth example 1200_2, a bonding area 1240_2 may be formed on each of a front surface and/or a rear surface of the electrode assembly 1230_2. This configuration, similar to the fifth example 1200_1, may prevent the movement of shifting of the electrode assembly 1230_2. However, it may cause an inward rolling of the separator and result in a decrease in an energy density of the battery.

As described in FIGS. 2 to 9, the tape may be attached to the inner surface(s) of the sidewall portion(s) of the case, instead of the surface of the electrode assembly. Therefore, the movement of shifting of the electrode assembly may be effectively controlled and the inward rolling (curling) of the separator may be prevented. Further, by ensuring that the adhesiveness of the second adhesive layer of the tape, which may face the electrode assembly, exhibits, e.g., activates, during the formation process of the battery, sufficient time for electrolyte impregnation may be secured.

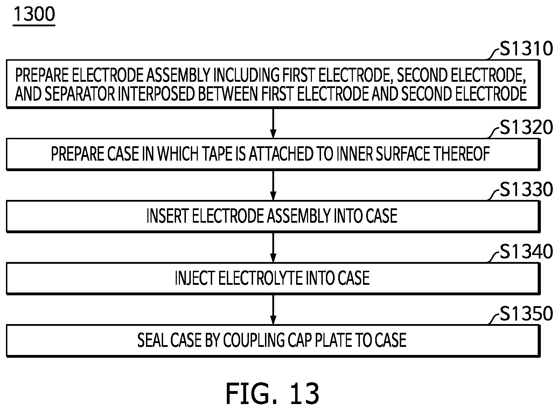

FIG. 13 illustrates a flowchart of a method 1300 for manufacturing a secondary battery according to one embodiment of the present disclosure. The method 1300 may begin with preparing an electrode assembly including a first electrode, a second electrode, and a separator interposed between the first and second electrodes (step S1310). An electrode tab, which may be connected to one of the first electrode and the second electrode, may protrude through at least one surface of the electrode assembly.

Subsequently, a case in which a tape may be attached to an inner surface thereof may be prepared (step S1320). The tape may include, e.g., a first adhesive layer and a second adhesive layer. The tape may be attached such that the first adhesive layer contacts and adheres to the inner surface of the case.

Next, the electrode assembly may be inserted into the case (step S1330). At this time, the second adhesive layer of the tape may face the electrode assembly inserted into the case. The tape may be attached to one or more portions of the inner surface of the case, excluding a portion of the inner surface facing the electrode tab of the electrode assembly. In other words, the electrode assembly may be inserted such that the surface through which the electrode tab protrudes faces a sidewall portion of the case where the tape may not be attached.

In one embodiment, the secondary battery may be a cylindrical battery. In an implementation, the case may include, e.g., a bottom portion, a cylindrical sidewall portion extending upward from the bottom portion, and an opening formed to be opposite to the bottom portion. In an implementation, the electrode assembly may be formed by winding a first electrode, a separator, and a second electrode. The first electrode may include, e.g., a first coated portion coated with an active material and the second electrode may include a second coated portion coated with an active material. In this case, the tape may be attached to an inner surface of the cylindrical sidewall portion. In an implementation, a width of the tape in a direction along the extension of the cylindrical sidewall portion may be at least equal to a first length, which may be a width of the first coated portion in a direction of a winding axis of the electrode assembly. In an implementation, the width of the tape in the direction along the extension of the cylindrical sidewall portion may be no greater than a second length, which may be a width of the second coated portion in the direction of the winding axis of the electrode assembly.

In another embodiment, the secondary battery may be a prismatic battery. In an implementation, the case may include, e.g., a bottom portion, at least four sidewall portions extending upward from the bottom portion, and an opening formed to be opposite to the bottom portion. In this case, the tape may be attached to each of inner surfaces of three of the four sidewall portions, excluding an inner surface of one of the four sidewall portions. In an implementation, in the direction in which the sidewall portions extend from the bottom portion, the width of the tape measured from the bottom portion may be 110% to 150% of the height of the electrode assembly measured from the bottom portion.

Subsequently, electrolyte may be injected into the case (step S1340). Thereafter, the case may be sealed by coupling a cap plate to the case (step S1350). After sealing the case, the method may further include at least one of a step of charging and discharging the secondary battery at a first temperature or a step of aging the secondary battery at a second temperature. The first temperature and the second temperature may both be 60°C or higher. In an implementation, the second adhesive layer of the tape may exhibit adhesiveness under the heat applied during the charging and discharging step or the aging step.

In an implementation, one or more processes in the flowchart and the above description may be added, altered, or deleted. The sequence of one or more processes may be changed, and one or more processes may be performed simultaneously.

By way of summation and review, the secondary battery may be manufactured by inserting an electrode assembly into a case, injecting electrolyte into the case, and then sealing the case with a cap assembly or a case cover. However, if the electrode assembly is not securely adhered and fixed in position within the case, the electrode assembly may shift or move inside the case due to external impacts or accidental drops of the battery. Such movement can result in damage to the electrode assembly or degradation of the battery's overall quality.

Embodiments of the present disclosure may provide a secondary battery and a method for manufacturing the secondary battery.

According to some embodiments of the present disclosure, instead of fixing the electrode assembly to the case through tape attached to the electrode assembly or bonding areas formed by applying adhesive, the electrode assembly may be fixed to the case using tape attached to the inner surface of the case. Accordingly, it may be possible to effectively restrain the movement or shifting of the electrode assembly during a drop event of the secondary battery.

According to some embodiments of the present disclosure, the adhesiveness of the tape facing the electrode assembly may be exhibited after heat is applied to the secondary battery during a formation process (an activation stage) of the secondary battery, thereby ensuring sufficient time for electrolyte impregnation. As a result, the electrode assembly may be fixed inside the case without being affected by the electrolyte impregnation process or impregnation time.

These and other aspects and features of the present disclosure will be described in or will be apparent from the above description of embodiments of the present disclosure.

Although the present disclosure has been described above with respect to embodiments thereof, the present disclosure is not limited thereto. Various modifications and variations can be made thereto by those skilled in the art within the scope of the present disclosure and the equivalent scope of the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A secondary battery, comprising:
an electrode assembly (130, 330, 630) including a first electrode, a second electrode, and a separator between the first electrode and the second electrode;
a case (100, 300, 600) accommodating the electrode assembly (130, 330, 630); and
a tape (200, 340, 640) attached to an inner surface of the case (100, 300, 600),
wherein:
the tape (200, 340, 640) includes a first adhesive layer (210, 340_1, 640_1) and a second adhesive layer (220, 340_2, 640_2),
the first adhesive layer (210, 340_1, 640_1) contacts and adheres to the inner surface of the case (100, 300, 600), and
the second adhesive layer (220, 340_2, 640_2) faces the electrode assembly (130, 330, 630).

2. The secondary battery as claimed in claim 1, wherein:
the first adhesive layer (210, 340_1, 640_1) is adhesive at a first temperature, and
the second adhesive layer (220, 340_2, 640_2) becomes adhesive at a second temperature higher than the first temperature.

3. The secondary battery as claimed in one of claims 1 or 2, wherein the second adhesive layer (220, 340_2, 640_2) comprises a thermoplastic adhesive .

4. The secondary battery as claimed in claims 1 to 3, wherein:
an electrode tab (132, 134), which is connected to one of the first electrode and the second electrode, protrudes through at least one surface of the electrode assembly (130, 330, 630), and
the tape (200, 340, 640) is attached to one or more portions of the inner surface of the case (100, 300, 600) that are not facing the electrode tab (132, 134).

5. The secondary battery as claimed in one of the preceding claims, wherein:
the case (300) includes a bottom portion (310), a cylindrical sidewall portion (320) extending upward from the bottom portion (310), and an opening opposite to the bottom portion, and
the tape (340) is attached to an inner surface of the cylindrical sidewall portion (320).

6. The secondary battery as claimed in claim 5, wherein:
the electrode assembly (330) is a winding-type electrode assembly (330) in which the first electrode (332), the separator (334), and the second electrode (333) are wound,
the first electrode (332) includes a first coated portion (332_1) coated with an active material, and
a width of the tape (340) along a direction of extension of the cylindrical sidewall portion (320) is equal to or greater than a first length (h1), which is a width of the first coated portion (332_1) along a direction of a winding axis of the electrode assembly (330).

7. The secondary battery as claimed in claim 6, wherein:
the second electrode (333) includes a second coated portion (333_2) coated with an active material, and
the width of the tape along the direction of extension of the cylindrical sidewall portion (320) is equal to or less than a second length (h2), which is a width of the second coated portion (333_2) along the direction of the winding axis of the electrode assembly (330).

8. The secondary battery as claimed in one of claims 1 to 4, wherein:
the case (600) includes a rectangular bottom portion (610), at least four sidewall portions (620_1, 620_2, 620_3, 620_4) extending upward from the bottom portion (610), and an opening opposite to the bottom portion (610), and
the tape (640) is attached to an inner surface of each of the at least four sidewall portions (620_1, 620_2, 620_3, 620_4) except one sidewall portion of the at least four sidewall portions (620_1, 620_2, 620_3, 620_4).

9. The secondary battery as claimed in claim 8, wherein:
an electrode tab, which is connected to one of the first electrode and the second electrode, protrudes through one surface of the electrode assembly (630), and
the electrode tab faces the inner surface of the one sidewall portion (620_1) of the at least four sidewall portions (620_1, 620_2, 620_3, 620_4) to which the tape (640) is not attached.

10. A method of manufacturing the secondary battery according to one of the preceding claims, the method comprising:
preparing (S1310) an electrode assembly (130, 330, 630) including a first electrode, a second electrode, and a separator interposed between the first electrode and the second electrode;
preparing (S1320) a case (100, 300, 600) and attaching a tape (200, 340, 640) including a first adhesive layer and a second adhesive layer to an inner surface thereof;
inserting (S1330) the electrode assembly (130, 330, 630) into the case (100, 300, 600);
injecting (S1340) electrolyte into the case (100, 300, 600); and
sealing (S1350) the case (100, 300, 600) by coupling a cap plate to the case (100, 300, 600),
wherein:
the first adhesive layer (210, 340_1, 640_1) of the tape (200, 340, 640) is positioned to contact and adhere to the inner surface of the case (100, 300, 600), and
the second adhesive layer (220, 340_2, 640_2) of the tape (200, 340, 640) is positioned to face the electrode assembly (130, 330, 630).

11. The method as claimed in claim 10, further comprising, after the sealing of the case (100, 300, 600):
charging and discharging the secondary battery at a first temperature, wherein the first temperature is 60°C or higher, and
the second adhesive layer (220, 340_2, 640_2) exhibits adhesiveness after application of heat during the charging and discharging of the secondary battery .

12. The method as claimed in claim 10, further comprising, after the sealing of the case (100, 300, 600):
aging the secondary battery at a second temperature, wherein the second temperature is 60°C or higher, and
the second adhesive layer (220, 340_2, 640_2) exhibits adhesiveness after application of heat during the aging of the secondary battery.

13. The method as claimed in one of claims 10 to 12, further comprising:
connecting an electrode tab to one of the first electrode and the second electrode, and
positioning the electrode tab to protrude through at least one surface of the electrode assembly (130, 330, 630),
wherein the tape is attached to one or more portions of the inner surface of the case (100, 300, 600), except for a portion of the inner surface facing the electrode tab.

14. The method as claimed in one of claims 10 to 12, wherein:
the case (100, 600) includes a bottom portion (610), at least four sidewall portions (620_1, 620_2, 620_3, 620_4) extending upward from the bottom portion (610), and an opening formed to be opposite to the bottom portion (610), and
the tape (640) is attached to an inner surface of each of the at least four sidewall portions (620_1, 620_2, 620_3, 620_4) except one sidewall portion of the at least four sidewall portions (620_1, 620_2, 620_3, 620_4).

15. The method as claimed in claim 14, further comprising:
connecting an electrode tab to one of the first electrode and the second electrode and
positioning the electrode tab to protrude through at least one surface of the electrode assembly (130, 630),
wherein the inserting of the electrode assembly (130, 630) includes inserting the electrode assembly (130, 630) into the case (100, 600) such that a first surface of the electrode assembly (130, 630), through which the electrode tab protrudes, faces the inner surface of the one sidewall portion (620_1) of the at least four sidewall portions (620_1, 620_2, 620_3, 620_4) to which the tape is not attached.
